# EUROPÄISCHE PATENTANMELDUNG

(11) **EP 1 419 976 A2**
(43) Veröffentlichungstag der Anmeldung: **19.05.2004**
(21) Anmeldenummer: 03023464.5
(22) Anmeldetag: 18.10.2003
(51) Int. Cl.: B65D 77/20

(54) **Deckelverbundmaterial mit Coextrusionsbeschichtung**

(30) Priorität: 13.11.2002 DE 10253110
(71) Anmelder: Hydro Aluminium Deutschland GmbH, 51149 Köln (DE)
(72) Erfinder: Dörr, Norman, Dipl.-Ing., 78256 Steisslingen (DE); Schubert, Günter, Dr., 53359 Rheinbach (DE)
(74) Vertreter: Schüll, Gottfried, Dipl.-Phys.

(57) **Zusammenfassung**

Die Erfindung betrifft ein Deckelverbundmaterial (1) für Verpackungen mit einer Aluminiumfolie (2) als Barrierefolie sowie ein Verfahren zur Herstellung des Deckelverbundmaterials (1). Die Aufgabe, ein Deckelverbundmaterial (1) für Verpackungen mit einer Aluminiumfolie (2) als Barrierefolie zur Verfügung zu stellen, welches sich durch geringe Herstellkosten und gute Barriere- und Siegeleigenschaften auszeichnet, wird dadurch gelöst, dass eine Aluminiumfolie (2) mit einer Dicke von weniger als 38 µm, vorzugsweise einer Dicke von 7 bis 15 µm, vorgesehen ist und die Aluminiumfolie (2) eine in einem Arbeitsgang aufgetragene dreifach Coextrusionsbeschichtung (3) aufweist. Durch den verringerten Materialeinsatz von Aluminium und die geringe Anzahl der Herstellungsschritte kann ein Deckelverbundmaterial (1) zur Verfügung gestellt werden, welches sich durch geringe Herstellkosten bei guten Barriere- und Siegeleigenschaften auszeichnet.

Für die Veröffentlichung mit der Zusammenfassung wird die einzige Figur vorgeschlagen.

## Beschreibung

Die Erfindung betrifft ein Deckelverbundmaterial für Verpackungen mit einer Aluminiumfolie als Barrierefolie sowie ein Verfahren zur Herstellung des Deckelverbundmaterials.

Deckelverbundmaterialien werden zumeist in sogenannten Form-Füll-Schließ(FFS)-Anlagen zur Verpackung von diversen Produkten, insbesondere Lebensmitteln, eingesetzt. Zum Verschließen der Verpackungen wird vorwiegend das Heißsiegelverfahren eingesetzt, sodass das Deckelverbundmaterial gute Heißsiegeleigenschaften aufweisen muss, um eine einwandfreies Verschließen der Verpackung zu gewährleisten. Neben guten Heißsiegeleigenschaften werden, insbesondere bei der Verpackung von Lebensmitteln, gute Barriereeigenschaften des Deckelverbundmaterials bezüglich gasförmiger Stoffe, beispielsweise Sauerstoff, Wasserdampf, etc. und gegen Licht gefordert, da gute Barriereeigenschaften die Haltbarkeit der Produkte, beispielsweise von Lebensmitteln, in der Verpackung verlängern.

Die bisher eingesetzten Deckelverbundmaterialien sind dazu entweder auf minimale Herstellkosten bei mittleren Produkteigenschaften, d.h. mittlere Siegel- und Barriereeigenschaften, zur Verpackung unkritischer Produkte oder auf maximalen Produktschutz und bestmöglicher Performance bei entsprechend höheren Herstellkosten zur Verpackung hochwertiger Produkte optimiert.

So ist beispielsweise ein 5-schichtiges Deckelverbundmaterial bekannt, welches neben einer Papierschicht mit einem Flächengewicht von 45 g/m² eine Leimkaschierungsschicht oder alternativ eine lösemittelhaltige Lackkaschierungsschicht, eine 12 µm dicke metallisierte Polyethylenterephtalat(mPET)-Schicht, eine Primer-Schicht sowie eine Heißsiegellackschicht mit einem Flächengewicht von 5,5 g/m² oder alternativ eine wässrig aufgetragene Heißsiegellackschicht aufweist.

Das auf Papier basierende Deckelverbundmaterial zeichnet sich aufgrund der geringen Materialkosten durch besonders geringe Herstellkosten aus. Nachteilig bei diesem Deckelverbundmaterial ist jedoch, dass es nur mittlere Barriere- und Siegeleigenschaften aufweist und somit insbesondere bei hohen Anforderungen an die Barriereeigenschaften gar nicht verwendet werden kann oder zu einer verringerten Haltbarkeit der Produkte führt.

Ein weiteres bekanntes Deckelverbundmaterial weist ebenfalls nur mittlere Barriereeigenschaften auf, da es lediglich aus einer PET-Schicht mit einer Dicke von beispielsweise 23 µm, einer Primer-Schicht sowie einer Heißsiegellackschicht mit einem Flächengewicht von 5,5 g/m² besteht.

Bei hohen Anforderungen an die Barriere- oder Siegeleigenschaften sowie einer guten Haptik des Deckelverbundmaterials muss daher auf andere Materialsysteme, beispielsweise auf Deckelverbundmaterialien mit einer Aluminiumfolie als Barrierefolie, zurückgegriffen werden.

Unter anderem ist ein Deckelverbundmaterial bekannt, welches neben einer oberen Primer-Schicht für die Bedruckung des Deckelverbundmaterials eine Aluminiumfolie mit einer Schichtdicke von 38 µm, eine untere Primer-Schicht sowie eine Heißsiegellackschicht mit einem Flächengewicht von 5,5 g/m² aufweist. Das zuvor beschriebene Deckelverbundmaterial zeichnet sich aufgrund der eingesetzten Aluminiumfolie durch hervorragende Barriere- und Siegeleigenschaften aus. Allerdings führt der Einsatz der Aluminiumfolie zu hohen Materialkosten, sodass ein wirtschaftlicher Einsatz nur für hochwertige Produkte in Frage kommt.

Eine verringerte Schichtdicke der Aluminiumfolie weist ein nächstes bekanntes Deckelverbundmaterial mit hoher Barrierewirkung auf, welches neben einer oberen Primer-Schicht zum Bedrucken des Deckelverbundmaterials eine Aluminiumfolie mit einer Schichtdicke von 20 µm oder 15 µm, eine lösemittelhaltige Lackkaschierungsschicht, eine PET-Schicht der Dicke 12 µm oder alternativ eine Schicht aus orientiertem (biaxial gerecktem) Polyamid (oPA) mit einer Schichtdicke von 15 µm, eine Primer-Schicht und eine Heißsiegellackschicht mit einem Flächengewicht von 5,5 g/m² aufweist.

Zwar weist dieses Deckelverbundmaterial eine verringerte Schichtdicke der Aluminiumfolie auf, sodass die Materialkosten bereits verringert sind, die hohe Anzahl von notwendigen Verfahrensschritten zum Aufbringen der weiteren Schichten führt jedoch wiederum zu einem großen Fertigungsaufwand und damit ebenfalls zu relativ hohen Herstellkosten.

Ausgehend von dem zuvor beschriebenen Stand der Technik liegt der vorliegenden Erfindung die Aufgabe zugrunde, ein Deckelverbundmaterial für Verpackungen mit einer Aluminiumfolie als Barrierefolie zur Verfügung zu stellen, welches sich durch geringe Herstellkosten und gute Barriere- und Siegeleigenschaften auszeichnet sowie ein Verfahren zur Herstellung eines derartigen Deckelverbundmaterials vorzuschlagen.

Gemäß einer ersten Lehre der vorliegenden Erfindung wird die oben hergeleitete und aufgezeigte Aufgabe für ein Deckelverbundmaterial dadurch gelöst, dass eine Aluminiumfolie mit einer Dicke von weniger als 38 µm, vorzugsweise mit einer Dicke von 7 bis 15 µm, vorgesehen ist und die Aluminiumfolie eine in einem Arbeitsgang aufgetragene mindestens dreifach Coextrusionsbeschichtung aufweist.

Es hat sich überraschenderweise gezeigt, dass das erfindungsgemäße Deckelverbundmaterial nicht nur gute Barriere- und Siegeleigenschaften aufweist, sondern auch leicht zu verarbeiten ist. Durch den verringerten Materialeinsatz von Aluminium und die geringe Anzahl der Herstellungsschritte kann ein Deckelverbundmaterial zur Verfügung gestellt werden, welches sich durch geringe Herstellkosten bei guten Barriere- und Siegeleigenschaften auszeichnet. Natürlich kann das beschriebene erfindungsgemäße Deckelverbundmaterial mit einer oberseitigen Primer-Schicht versehen werden, welche die Bedruckung der Aluminiumfolie ermöglicht.

Die Hafteigenschaft der Coextrusionsbeschichtung kann, gemäß einer weitergebildeten Ausführungsform des erfindungsgemäßen Deckelverbundmaterials, dadurch verbessert werden, dass die dreifach Coextrusionsbeschichtung mindestens eine Haftvermittlerschicht aufweist.

Weist die dreifach Coextrusionsbeschichtung mindestens eine die mechanischen Eigenschaften des Deckelverbundmaterials verbessernde Polymerschicht auf, kann, gemäß einer nächsten weitergebildeten Ausführungsform des erfindungsgemäßen Deckelverbundmaterials, ein Deckelverbundmaterial mit verbesserter Festigkeit, insbesondere einer verbesserten Durchstoß- und Einreißfestigkeit, zur Verfügung gestellt werden. Darüber hinaus lässt sich durch eine Variation der Schichtdicke und des Materials der Polymerschicht beispielsweise die Verarbeitungsfähigkeit des Deckelverbundmaterials an die vorzugsweise eingesetzten FFS-Anlagen aber auch an Füll-Schließ-(FS)Anlagen anpassen.

Gemäß einer nächsten Ausführungsform des erfindungsgemäßen Deckelverbundmaterials kann ein leicht zu öffnendes Deckelverbundmaterial mit guten Barriereund Siegeleigenschaften dadurch zur Verfügung gestellt werden, dass die dreifach Coextrusionsbeschichtung zumindest eine Peelschicht aufweist.

Ist zur Verbesserung der mechanischen Eigenschaften des Deckelverbundmaterials eine Polyethylen- oder Polyamidschicht vorgesehen, können die mechanischen Eigenschaften des Deckelverbundmaterials auf kostengünstige Weise verbessert werden. Darüber hinaus weisen beide Materialien vorteilhafte Verarbeitungseigenschaften beim Coextrudieren auf. Dabei kann die Polyethylenschicht beispielsweise aus modifiziertem Polyethylen oder einem Ethylencopolymer mit hohem Ethylenanteil bestehen. Weiter ist es auch denkbar, andere Kunststoffe zur Verbesserung der mechanischen Eigenschaften beim dreifach Coextrusionsbeschichten einzusetzen.

Gemäß einer nächsten vorteilhaften Ausführungsform des erfindungsgemäßen Deckelverbundmaterials werden die mechanischen Eigenschaften der Peelschicht dadurch verbessert, dass eine Linear-Low-Density-Polyethylen (LLDPE)- oder Medium-Density-Polyethylen (MDPE)-oder eine Polypropylen(PP)-Schicht als Peelschicht vorgesehen ist, da LLDPE, MDPE und PP gegenüber dem üblicherweise zur Herstellung einer Peelschicht verwendeten Low-Density-Polyethylen (LDPE) einen höheren Schmelzpunkt und eine erhöhte mechanische Festigkeit aufweisen.

Gemäß einer zweiten Lehre der vorliegenden Erfindung wird die oben aufgezeigte Aufgabe durch ein Verfahren zur Herstellung eines Deckelverbundmaterials für Verpackungen dadurch gelöst, dass eine Aluminiumfolie mit einer Dicke von weniger als 38 µm, vorzugsweise mit einer Dicke von 7 bis 15 µm in einem Arbeitsgang mit einer mindestens dreifach Coextrusionsbeschichtung beschichtet wird.

Das erfindungsgemäße Herstellverfahren zeichnet sich durch eine besonders geringe Anzahl an Verfahrensschritten aus, sodass, zusammen mit den aufgrund der verringerten Dicke der Aluminiumfolie herabgesetzten Materialkosten, die Herstellung eines Deckelverbundmaterials mit sehr geringen Herstellkosten und guten Barriere- und Siegeleigenschaften ermöglicht wird.

Zur Verbesserung der Haftung der unterschiedlichen Schichten auf der Aluminiumfolie ist es, gemäß einer weitergebildeten Ausführungsform des erfindungsgemäßen Herstellverfahrens, vorteilhaft, dass beim Coextrusionsbeschichten mindestens eine Haftvermittlerschicht mit coextrudiert wird.

Wird mindestens eine die mechanischen Eigenschaften des Deckelverbundmaterials verbessernde Polymerschicht beim Coextrusionsbeschichten mit coextrudiert, so kann die mechanische Festigkeit beispielsweise auf die Verarbeitung des Deckelverbundmaterials in FFS-Anlagen trotz der verringerten Dicke der Aluminiumfolie angepasst werden. Ferner kann durch die Polymerschicht auch die Rollneigung des Verbundmaterials gesteuert werden. Als einsetzbare Polymere kommen dabei alle coextrusionsfähigen Kunststoffe in Frage.

Verringerte Herstellkosten können, gemäß einer weiteren Ausführungsform des erfindungsgemäßen Verfahrens zur Herstellung eines Deckelverbundmaterials, dadurch gewährleistet werden, dass beim Coextrusionsbeschichten eine die mechanischen Eigenschaften verbessernde PE- oder PA-Schicht mit coextrudiert wird.

Wird beim Coextrusionsbeschichten mindestens eine Peelschicht mit coextrudiert, so kann auf einfache Weise ein nach dem Versiegeln leicht zu öffnendes Deckelverbundmaterial hergestellt werden.

Verbesserte mechanische Eigenschaften der Peelschicht können, gemäß einer weiteren Ausführungsform des erfindungsgemäßen Verfahrens zur Herstellung eines Deckelverbundmaterials, auf einfache Weise dadurch gewährleistet werden, dass als Peelschicht eine LLDPEoder MDPE- oder eine PP-Schicht mit coextrudiert wird.

Es gibt nun eine Vielzahl von Möglichkeiten, dass erfindungsgemäße Deckelverbundmaterial für Verpackungen mit einer Aluminiumfolie als Barrierefolie sowie das erfindungsgemäße Verfahren zur Herstellung eines Deckelverbundmaterials mit einer Aluminiumfolie als Barrierefolie auszugestalten und weiterzubilden. Hierzu wird beispielsweise verwiesen einerseits auf die den Patentansprüchen 1 und 7 nachgeordneten Patentansprüche, andererseits auf die Beschreibung eines Ausführungsbeispiels in Verbindung mit der Zeichnung. In der Zeichnung zeigt die einzige Figur ein erfindungsgemäßes Deckelverbundmaterial in einer Schnittansicht.

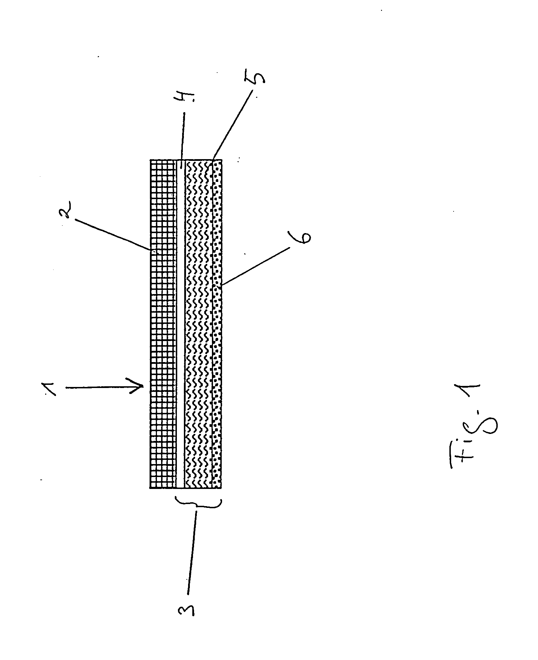

Die Fig. 1 zeigt ein erfindungsgemäßes Deckelverbundmaterial 1 in einer Schnittansicht, welches aus einer Aluminiumfolie 2 und einer in einem Arbeitsgang aufgetragenen dreifach Coextrusionsbeschichtung (3) besteht. Die Coextrusionsbeschichtung (3) weist dabei vorzugsweise eine Haftvermittlerschicht 4, eine Polymerschicht 5 und eine Peelschicht 6 auf. Wie bereits ausgeführt, gewährleistet das erfindungsgemäße Deckelverbundmaterial einerseits aufgrund kleiner als 38 µm, vorzugsweise 7 bis 15 µm dicken Aluminiumfolie 2 neben guten Siegeleigenschaften und guten Barriereeigenschaften auch geringere Materialkosten bei der Herstellung. Andererseits werden die Herstellungskosten durch die geringe Anzahl an Verarbeitungsschritten weiter verringert.

Die vorzugsweise mit einem Flächengewicht von ca. 2 g/m² beim dreifach Coextrusionsbeschichten mit coextrudierte Haftvermittlerschicht 4 dient dabei der Verbesserung der Haftung der nachfolgenden Polymerschicht 5 und der Peelschicht 6 auf der Aluminiumfolie 2, sodass es zu weniger Ausschuss bei der Herstellung des Deckelverbundmaterials 1 sowie bei der Weiterverarbeitung des Deckelverbundmaterials 1 in FFS-Anlagen kommt.

Zur Verbesserung der mechanischen Festigkeit des Deckelverbundmaterials 1 wird nun beim dreifach Coextrusionsbeschichten eine Polymerschicht 5, vorzugsweise mit einem Flächengewicht von ca. 15 g/m² mit coextrudiert. Üblicherweise wird dabei eine Polymerschicht 5 aus PE oder PA verwendet, welche einerseits gute mechanische Eigenschaften aufweist und andererseits leicht zu verarbeiten ist. Es können jedoch auch andere coextrusionsfähige Kunststoffe zur Herstellung dieser Schicht verwendet werden.

Die weitere beim dreifach Coextrusionsbeschichten in einem Arbeitsgang aufgetragene Peelschicht 6 wird vorzugsweise mit einem Flächengewicht von 6 g/m² aufgetragen, wobei es darüber hinaus vorteilhaft ist, wenn die Peelschicht aus LLDPE oder MDPE oder PP besteht. Alle drei Materialien zeichnen sich einerseits durch gute Ablöseeigenschaften (Peeleigenschaften) nach dem Versiegeln und gute Siegeleigenschaften bei der Verarbeitung in FFS-Anlagen oder FS-Anlagen aus. Andererseits weisen LLDPE- ,MDPE- und PP-Schichten eine erhöhte mechanische Festigkeit gegenüber LDPE-Schichten auf, sodass die mechanische Festigkeit der Peelschicht 6 weiter gesteigert werden kann.

Zusätzlich kann die Aluminiumfolie des erfindungsgemäßen Deckelverbundmaterials mit einer in der Figur nicht dargestellten oberseitigen Primer-Schicht versehen werden, sodass die oberseitige Bedruckung des Deckelverbundmaterials möglich ist.

## Patentansprüche

1. Deckelverbundmaterial für Verpackungen mit einer Aluminiumfolie als Barrierefolie,
**dadurch gekennzeichnet, dass** eine Aluminiumfolie (2) mit einer Dicke von weniger als 38 µm, vorzugsweise mit einer Dicke von 7 bis 15 µm, vorgesehen ist und die Aluminiumfolie (2) eine in einem Arbeitsgang aufgetragene mindestens dreifach Coextrusionsbeschichtung (3) aufweist.

2. Deckelverbundmaterial nach Anspruch 1,
**dadurch gekennzeichnet, dass** die dreifach Coextrusionsbeschichtung (3) mindestens eine Haftvermittlerschicht (4) aufweist.

3. Deckelverbundmaterial nach Anspruch 1 oder 2,
**dadurch gekennzeichnet, dass** die dreifach Coextrusionsbeschichtung (3) mindestens eine die mechanischen Eigenschaften des Deckelverbundmaterials (1) verbessernde Polymerschicht (5) aufweist.

4. Deckelverbundmaterial nach einem der Ansprüche 1 bis 3,
**dadurch gekennzeichnet, dass** die dreifach Coextrusionsbeschichtung (3) mindestens eine Peelschicht (6) aufweist.

5. Deckelverbundmaterial nach Anspruch 3 oder 4,
**dadurch gekennzeichnet, dass** eine Polyethylen(PE)- oder Polyamid(PA)-Schicht (5) zur Verbesserung der mechanischen Eigenschaften des Deckelverbundmaterials (1) vorgesehen ist.

6. Deckelverbundmaterial nach Anspruch 4 oder 5,
**dadurch gekennzeichnet, dass** eine Linear-Low-Density-Polyethylen(LLDPE)- oder Middle-Density-Polyethylen(MDPE) oder Polypropylen(PP)-Schicht als Peelschicht (6) vorgesehen ist.

7. Verfahren zur Herstellung eines Deckelverbundmaterials für Verpackungen mit einer Aluminiumfolie als Barrierefolie, insbesondere nach einem der Ansprüche 1 bis 6,
**dadurch gekennzeichnet, dass** eine Aluminiumfolie mit einer Dicke von weniger als 38 µm, vorzugsweise mit einer Dicke von 7 bis 15 µm, in einem Arbeitsgang mit einer mindestens dreifach Coextrusionsbeschichtung beschichtet wird.

8. Verfahren zur Herstellung eines Deckelverbundmaterials nach Anspruch 7,
**dadurch gekennzeichnet, dass** beim Coexstrusionsbeschichten mindestens eine Haftvermittlerschicht mit coextrudiert wird.

9. Verfahren zur Herstellung eines Deckelverbundmaterials nach Anspruch 8,
**dadurch gekennzeichnet, dass** beim Coextrusionsbeschichten mindestens eine die mechanischen Eigenschaften des Deckelverbundmaterials verbessernde Polymerschicht mit coextrudiert wird.

10. Verfahren zur Herstellung eines Deckelverbundmaterials nach einem der Ansprüche 7 bis 9,
**dadurch gekennzeichnet, dass** beim Coextrusionsbeschichten eine die mechanischen Eigenschaften verbessernde Polyethylen(PE)- oder Polyamid(PA)-Schicht mit coextrudiert wird.

11. Verfahren zur Herstellung eines Deckelverbundmaterials nach einem der Ansprüche 7 bis 10,
**dadurch gekennzeichnet, dass** beim Coextrusionsbeschichten mindestens eine außenliegende Peelschicht mit coextrudiert wird.

12. Verfahren zur Herstellung eines Deckelverbundmaterials nach Anspruch 11,
**dadurch gekennzeichnet, dass** als Peelschicht eine LLDPE- oder MDPE- oder PP-Schicht mit coextrudiert wird.
